# EUROPEAN PATENT SPECIFICATION

(11) **EP 3 293 836 B1**
(45) Date of publication and mention of the grant of the patent: **17.04.2019**
(21) Application number: 16187824.4
(22) Date of filing: 08.09.2016
(51) Int. Cl.: H01R 43/12, H01R 39/24, H01R 39/20, H01R 43/28

(54) **METHODS OF MAKING CONTACT WIRES FOR SLIPRINGS, DEVICE FOR MANUFACTURING OF CONTACT WIRES FOR SLIPRINGS AND CONTACT WIRES FOR SLIPRINGS**
VERFAHREN ZUR HERSTELLUNG VON KONTAKTDRAHTEN FÜR SCHLEIFRINGE, VORRICHTUNG ZUR HERSTELLUNG VON KONTAKTDRAHTEN FÜR SCHLEIFRINGE UND KONTAKTDRAHTEN FÜR SCHLEIFRINGE
PROCÉDÉS DE FABRICATION DE FILS CONDUCTEURS POUR BAGUES COLLECTRICES, APPAREIL POUR LA FABRICATION DE FILS CONDUCTEURS POUR BAGUES COLLECTRICES ET FILS CONDUCTEURS POUR BAGUES COLLECTRICES

(43) Date of publication of application: 14.03.2018
(73) Proprietor: Schleifring GmbH, 82256 Fürstenfeldbruck (DE)
(72) Inventor: Holzapfel, Christian, 82256 Fürstenfeldbruck (DE)
(74) Representative: Lohr, Jöstingmeier & Partner

(56) References cited:
- EP-A1- 2 838 166
- DE-A1-102011 051 804
- DE-U1-202015 101 280
- GB-A- 1 405 953
- US-A- 2 036 034
- US-A- 3 158 258

## Description

### Field of the invention

The invention relates to sliprings for transmission of electrical signals between rotating parts. Specifically, it relates to methods of making contact wires for sliprings, a device for manufacturing of structured contacts wires for sliprings and slipring contact wires processed therewith having a surface which improves contact characteristics and lifetime.

### Description of the related art

Electrical sliprings are used to transfer electrical power and/or signals between a rotating and a stationary part. Such devices are used in different applications, like wind energy plants or computer tomography scanners. There are also several military and aerospace applications.

It is common to all of these applications, that a high lifetime and a low contact resistance as well as a low contact noise are required.

Sliprings are generally based on a first part having sliding tracks and a second part having brushes for sliding on the sliding tracks. Due to the mechanical friction there is wear which causes the slipring to degrade over time.

DE-20 2015 101 280 U1 discloses a slipring contact wire having a structured surface produced with a method comprising the step of radiating a laser beam on the surface of the contact wire.

US-3 158 258 discloses a method for pressing a surface structure into a wire.

EP 0662736 A discloses a slipring assembly, where a single brush has several wires that run in a V-groove. This leads to a lower contact resistance due to connecting several contacts in parallel.

US 4398113 A discloses another slipring assembly with brushes having a plurality of finest wires. Again, the multiple contacts lead to a relatively low contact resistance.

### Summary of the invention

The problem to be solved by the invention is designing methods of making contact wires for sliprings, a device for manufacturing of structured contacts wires for sliprings and slipring contact wires processed therewith so that they will ensure reliable electrical contact with a high service life time and high reliability. They should be able to transfer high currents while having a comparatively small size. Production should be simple and for low costs.

Solutions of the problem are described in the independent claims. The dependent claims relate to further improvements of the invention.

In a slipring, the electrical contact is established between a cylindrical drum having sliding tracks arranged in an axial direction or a disk having sliding tracks with different diameters arranged radially, and a contacting wire or a plurality of contacting wires called brush. Herein, reference is made to a wire, knowing that a brush may be formed by a plurality of such wires which are electrically connected together and which may be mechanically held together or which may separately be held, such that they contact at least a sliding track.

For achieving good electrical contact, low contact resistance, low contact noise, and high current transfer characteristics in addition with a long lifetime and low wear, the material properties of the brush have to be adapted to the sliding track. To obtain a good contact, comparatively complex brushes may be used. Such a brush may have an inner core of a spring-elastic material like steel of even spring steel, or brass, or similar material. This core may have at least one or multiple layers which may be obtained by coating, plating, electroplating or a similar process. Preferably, on the core there is at least one inner layer of a comparatively hard metal, preferably nickel or a combination of nickel with other metals. To obtain good electrical characteristics, there is preferably at least one outer layer comprising silver, gold, any other good contacting material or a combination thereof.

For best contacting properties, the surface structure may be optimized.

According to the invention, a predetermined surface structure is provided at at least parts of a brush wire. Such a surface structure may comprise a certain surface roughness being defined by an amplitude between a maximum valley depth and a maximum peak height, thus defining an R_{z} value. The roughness may also be defined by an arithmetical mean roughness which may be given by an R_{A} value. Preferably, the surface may have a structure being defined by a grid, notches, and/or a polygonal structure. Most preferably, the R_{Z} value is in a range of 0.1 µm to 2 µm, most preferably between 0.5 µm to 1.8 µm. These values should be regarded as guidelines. In reality the 3D surface structure with valleys and hills is important since the valleys do act as micro reservoirs for lubrication (in cases when liquid lubrication is being used) whereas the hills or ridges are mainly important for the detailed mechanical contact properties. They will be deformed elastically and plastically during sliding and therefore are mainly responsible for friction properties as well as wear evolution. This point is especially significant during early sliding (running-in-stage) where e.g. material transfer between brush and wire can occur. Even if the initial structure is lost during sliding the resulting new contact configuration during running-in will mainly determine the tribological evolution of the system. Therefore even after structure loss there is an effective "memory" effect that still imprints the influence of the starting structure on the sliding properties. E.g. for typical sliding distances representative for fretting (on the scale of meters maximum) the structure might survive. For typical sliding distances over the lifetime of slip rings (>> 1 km, typically 10000 km) the aforementioned memory effect has been shown in experiments. Such a structure may cover the whole brush wire, or it may only cover a specific section. In a preferred embodiment of a contact wire with a circular cross-section, the surface structure may cover an angle of less than 180 degrees of the wire, as a contact wire never contacts a sliding track at its full outer surface. The contact surface is always limited to a small surface area. Therefore, it is preferred limiting the structured area to reduce manufacturing costs. In a preferred embodiment, the section is further limited, for example by limiting the angle to less than 90 degrees or even less than 60 degrees or 45 degrees. There may also be two or more sections with a surface structure having an angular distance from each other. This may be useful when running a sliding wire at a V-shaped sliding track which provides two contacting points. Furthermore, the surface structure may be limited to a certain area at a certain length of the wire, as a contact wire does not contact a sliding track over its whole length. This area limitation may also be combined with the angular limitation as described above.

Structuring of a surface may be made at the inner layer. As this inner layer will be covered by an outer layer at a later stage, it is preferred to have a deeper structuring to achieve the structure depth as mentioned above. Alternatively, structuring may be applied to the outer layer. There may be a combined structuring of the inner layer and the outer layer, which would allow to achieve a combination of different structures.

An embodiment according to independent claim 1 relates to a method for structuring a contact wire by using a structured drawing die. Wires are manufactured by pulling a wire through a drawing die, thus reducing the diameter for a small amount. This process may be repeated multiple times to generate the desired wire diameter by using drawing dies with decreasing diameter. Normally, drawing dies have a polished inner surface to reduce the forces required for drawing and to obtain a smooth wire surface. It is preferred to have a structured drawing die instead. Such a drawing die may have a plurality of grooves which may result in a wire having a corresponding plurality of grooves. Such grooves may be oriented parallel to a center axis of the wire, or they may be oriented under an angle to generate a spiral-shaped groove or a plurality of spiral-shaped grooves at the wire surface.

A further preferred method for structuring a contact wire is by using laser interference structuring in accordance with independent claim 2. Laser interference structuring may provide many small patterns or structures at the surface of a wire. For laser interference structuring, two coherent laser beams may be applied to the surface of a wire and may generate an interference pattern at the surface of the wire, thus melting or evaporating specific surface sections of the wire. It may also be sufficient for structuring to modify the crystal structure of the wire material by generating a patterned heat.

A further embodiment relates to a brush block comprising an insulating body holding at least one contact wire having a structured surface and processed by one of the methods of claims 1 or 2.

Another embodiment relates to a slipring having a slipring module and a brush block further having at least one contact wire with a structured surface and processed by one of the methods of claims 1 or 2.

Another embodiment in accordance with independent claim 1 relates to a method of manufacturing a contact wire for sliprings by pulling a wire through a structured drawing die. The drawing die has protrusions and/or recesses to form a structure in a wire being pulled through the drawing die.

A further embodiment in accordance with independent claim 2 relates to a method of laser structuring a contact wire for a slipring by generating an interfering laser pattern at the surface of a contact wire. The laser pattern may cover only sections of the length or radial sections of a circular contact wire or other sections of a contact wire having any other shape. Laser structuring may be done after a first step of coating or plating or electro-plating a wire with a metal layer which may be a hard metal, like nickel or chromium or a combination thereof, and/or a metal layer having good electrical contacts, like gold, silver, or a combination thereof with other metals. In a further embodiment, a contact wire may be coated, plated, or electro-plated by a metal having good electrical characteristics, like gold, silver, or a combination thereof with other metals.

A further aspect of the invention as defined in independent claim 4 is a device for structuring the surface of a contact wire. The device comprises a laser generating a laser beam, which is split into at least two partial laser beams, for example by a splitter or a mirror. There are further mirrors and/or lenses for guiding and/or focusing and/or collimating at least two of the partial laser beams on a focus spot, where they can interfere. There are further means for holding and/or transporting a brush wire in the area of the focus spot, such that the laser can interfere with the surface of the contact wire. There may be transport means for transporting the contact wire. There may furthermore be control means for controlling intensity and/or time. This may allow the laser to generate laser pulses, thus generating a sequence of laser patterns at the surface of a contact wire. The contact wire may either be continuously transported or may be transported in steps, such that the laser may produce structured surface sections which may be distant from each other or which may form a closed surface area.

### Description of Drawings

In the following the invention will be described by way of embodiments with reference to the drawings.
Figure 1 shows a basic slipring.
Figure 2 shows a side view of a slipring.
Figures 3 to 10 show different embodiments of wire structures.
Figure 11 shows a sectional view of a contact wire having a partially structured surface.
Figure 12 shows a sectional view of another contact wire having a partially structured surface.
Figure 13 shows a sectional view of another contact wire having a partially structured surface.
Figure 14 shows a sliding brush with a sectioned surface running on a V-shaped sliding track.
Figure 15 shows details of a section of a contact brush.
Figure 16 shows a partial structuring of a contact wire.
Figure 17 discloses a device for laser structuring of contact wires
Figure 18 shows a drawing die in a front view.

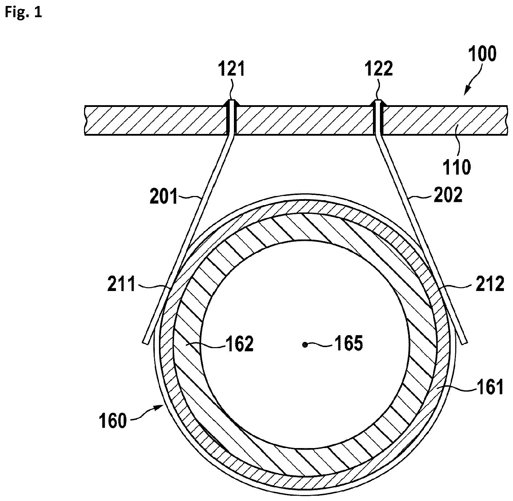

In Figure 1, a basic slipring is shown. It comprises a cylindrical module 160 having at least one sliding track 161 of a conductive material like a metal, which is supported by an insulating body 162, preferably of a plastic material. The module is rotatable about a center axis 165. There may be stationary brush block 100 comprising an insulating body 110 holding at least one contact wire 201, 202. The contact wires may be soldered by soldering connections 121, 122 into through-holes of the insulating body 110. The contact wires have a contact area 211, 212 at which they contact the module 160.

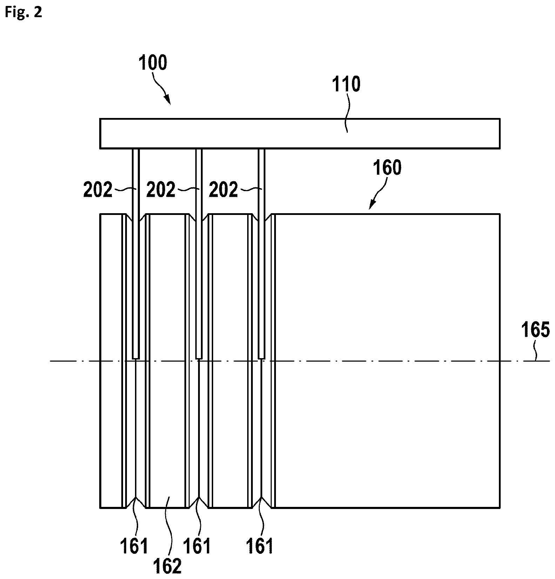

In Figure 2, the slipring is shown in a side view. The cylindrical module shows sliding tracks 161 spaced apart by insulating body 162. The sliding tracks 161 have V-shaped grooves for guiding the contact wires. In this Figure, three sliding tracks 161 isolated from each other are shown together with corresponding brushes 202, which are also isolated from each other, thus allowing simultaneous transfer of three signals or three current paths over the slipring.

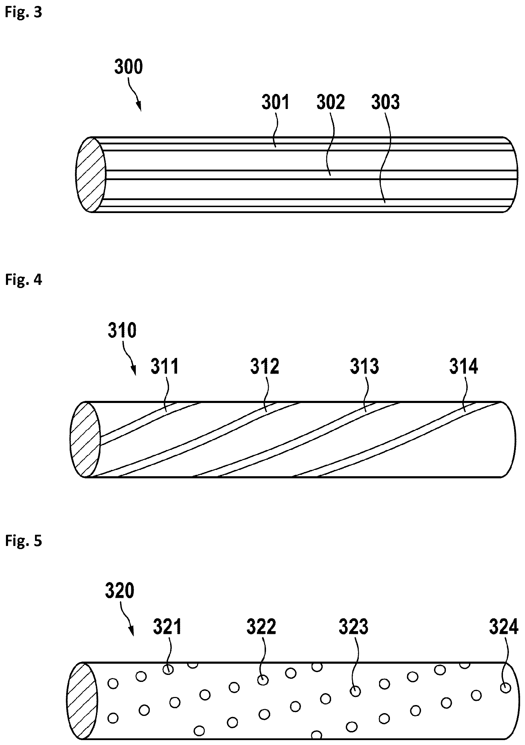

In Figures 3 to 10, different embodiments of wire structures are shown. As mentioned above, a contact wire 201, 202 preferably has a predetermined surface structure.

Figure 3 shows a first embodiment of a contact wire 300 having first linear structures 301, 302, 303. These structures may be recesses and/or protrusions, which may preferably be generated by a drawing die.

Figure 4 shows a second embodiment of a contact wire 310 having spiral structures 311, 312, 313, 314. These structures may be recesses and/or protrusions, which may preferably be generated by a drawing die.

Figure 5 shows a third embodiment of a contact wire 320 having dotted structures 321, 322, 323, 324. These structures may be recesses and/or protrusions.

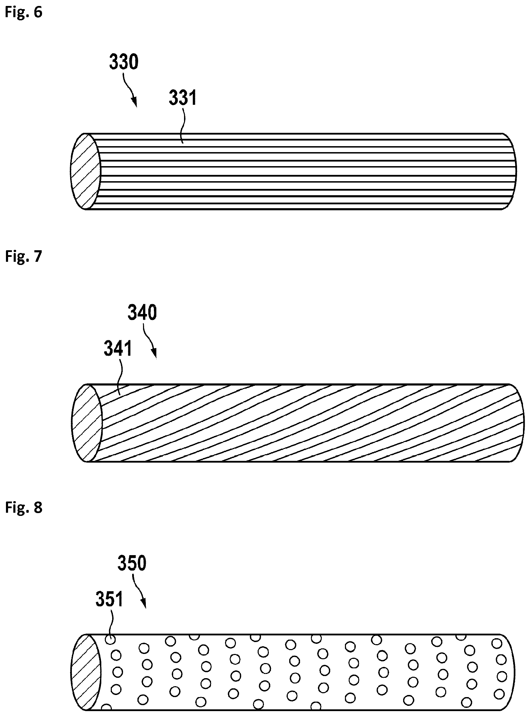

Figure 6 shows a fourth embodiment of a contact wire 330 having fine linear structures 331. These structures may be recesses or protrusions, which may preferably be made by a drawing die.

Figure 7 shows a fifth embodiment of a contact wire 340 having fine spiral structures 341. These structures may be recesses and/or protrusions, which may preferably be made by a drawing die.

Figure 8 shows a sixth embodiment of a contact wire 350 having fine dotted structures 351. These structures may be recesses and/or protrusions.

Specifically for manufacturing the embodiments of Figure 3, 4, 6, and 7, a structured drawing die may be used. Such a drawing die may have protrusions and/or recesses defining the surface structure of the wire.

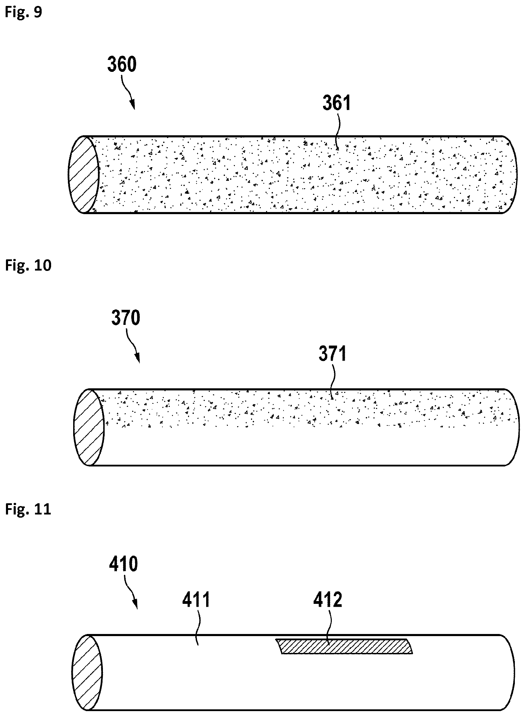

Figure 9 shows a further embodiment of a contact wire 360 having a micropattern 361 which may be made by laser interference structuring. In this embodiment, the pattern is provided at the whole surface of the wire.

Figure 10 shows a further embodiment of a contact wire 370 having microstructures 371 at a section of the surface of the wire. As a contact wire does not contact a sliding track over its whole surface, it may be sufficient to provide a surface structure only at parts of the contact wire. This may furthermore simplify the process of laser structuring.

Figure 11 shows a partial structuring of a contact wire 410, which has a wire body 411, and only a partial structure in an area 412. It is not necessary to provide a structuring over the whole length of a contact wire, as it only stays in contact with the sliding track over a small section. It is preferred to provide a structured surface only over a length in a range of 1 mm to 20 mm, most preferably in a range between 5 mm and 10 mm.

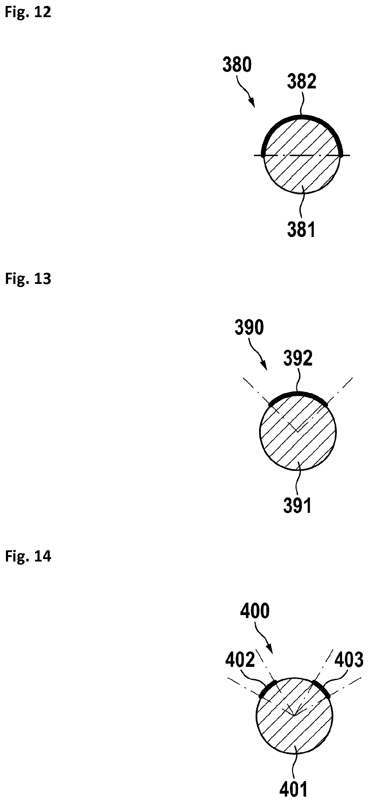

In Figure 12, a sectional view of a contact wire having a partially structured surface is shown. A contact wire 380 comprises core material 381 which may be based on steel or brass material. It furthermore has a section 382 of about half the circumference provided with the structure.

In Figure 13, a sectional view of a contact wire having a partially structured surface is shown. A contact wire 390 comprises core material 391 which may be based on steel or brass material. It furthermore has a 90 degree section 392 of the circumference provided with the structure.

In Figure 14, a sectional view of a contact wire having a partially structured surface is shown. A contact wire 400 comprises core material 401 which may be based on steel or brass material. It furthermore has two 45 degrees sections 402, 403 of the circumference provided with the structure, which sections are preferably used with a V-shaped sliding track.

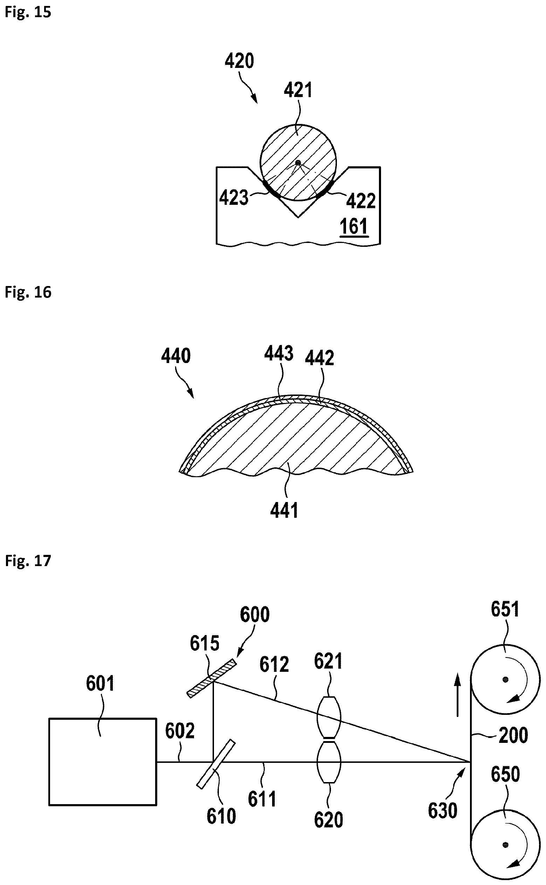

In Figure 15, a sliding brush with a sectioned surface running on a V-shaped sliding track is shown. The sliding brush 420 is guided in a V-shaped groove of a sliding track 161, resulting in two separate contact areas. The surface of the brush wire core 421 has two structured areas 422, 423 which are located at the contact points between the wire brush 420 and the sliding track 161.

In Figure 16, details of a section of a contact brush 440 are shown. The brush has a brush core 441 which may comprise steel, brass, or any other metal or a combination thereof providing a comparatively stiff but spring-elastic structure. There are preferably at least two surface layers. Preferably, there is an inner layer 442 which may comprise a hard metal like nickel. There may be an outer layer 443 which may comprise a material or metal having good contact characteristics, like silver or gold, or a combination thereof. The inner and outer layer may be manufactured by coating or plating, preferably by electro-plating. The inner and/or the outer layer may be structured as shown above.

Figure 17 discloses a device for laser structuring of contact wires. A laser 601 provides a laser beam 602, which may be split by a splitting mirror 610 into at least two preferably equal beams 611, 612. The second partial beam 612 may be deflected by a mirror 615 such that the second partial beam and the first partial beam are deflected towards a focus spot 630. There may be additional lenses 620, 621 for focusing and/or collimating the first and the second laser beams 611, 612. A contact wire 200 may be moved along the area of the focus spot 630. This may be done by a first spool 650 storing unstructured wire and a second spool 651 for storing structured wire. Both spools may be rotated, such that the wire is moved continuously and/or stepwise. There may be further guide rollers which are not shown in-here, or other guiding means for precisely guiding the contact wire at the focus spot. There may be further means for cutting the structured contact wire into pieces and moving these pieces to a container or mounting them directly into brush blocks.

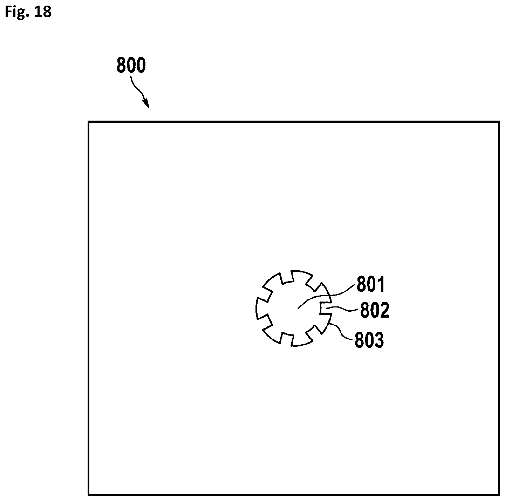

Figure 18 shows a drawing die 800 in a front view. The drawing die 800 has an inner opening 801 through which a wire is pulled. The inner opening has a structured contour providing protrusions 802 and recesses 803, producing a structured surface of a wire when it is pulled through the die.

### List of reference numerals

- 100: brush block
- 110: insulating body
- 121: soldering connection
- 122: soldering connection
- 160: slipring module
- 161: sliding track
- 162: insulating body
- 165: center axis
- 201: contact wire
- 202: contact wire
- 211: contact area
- 212: contact area
- 300: first contact wire embodiment
- 301, 302, 303: linear structures
- 310: second contact wire embodiment
- 311, 312, 313, 314: spiral structures
- 320: third contact wire embodiment
- 321, 322, 323, 324: spiral dots
- 330: fourth contact wire embodiment
- 331: fine linear structures
- 340: fifth contact wire embodiment
- 341: fine spiral structures
- 350: sixth contact wire embodiment
- 351: fine dotted structures
- 360: seventh contact wire embodiment
- 361: micropattern
- 370: eighth contact wire embodiment
- 371: microstructures
- 380: contact wire embodiment
- 381: core material
- 382: half circumference section
- 390: contact wire embodiment
- 391: core material
- 392: 90 degree section
- 400: contact wire embodiment
- 401: core material
- 402, 403: 45 degrees sections
- 410: contact wire
- 411: wire body
- 412: structured area
- 420: sliding brush
- 421: contact wire core
- 422, 423: structured areas
- 440: contact brush
- 441: brush core
- 442: inner layer
- 443: outer layer
- 601: laser
- 602: laser beam
- 610: splitting mirror
- 611: first partial beam
- 612: second partial beam
- 615: mirror
- 620: first beam lens
- 621: second beam lens
- 630: focus spot
- 650: spool storing unstructured wire
- 651: spool storing structured wire
- 800: drawing die
- 801: inner opening
- 802: protrusions
- 803: recesses

## Claims

1. Method of making contact wires (300) for sliprings (160), comprising the steps of:
a. pulling a wire through a drawing die (800), thereby pressing a surface structure (301, 302, 303) into the wire,
b. coating and/or plating the wire with a first metal of the group of nickel, chrome, or a combination thereof,
c. coating and/or plating the wire with a second metal of the group of gold, silver, or a combination thereof.

2. Method of making contact wires (360) for sliprings (160), comprising the steps of:
a. coating and/or plating a wire with a first metal of the group of nickel, chrome, or a combination thereof,
b. coating and/or plating the wire with a second metal of the group of gold, silver, or a combination thereof,
c. delivering laser radiation and generating an interference pattern of the laser radiation to the surface of the wire,
d. heating the surface selectively as defined by the interference pattern,
e. modifying of the crystal structure and/or providing protrusions and/or recesses due to melting and/or evaporation of the surface material, wherein the steps c. to e. may be applied before or after any of steps a. and b.

3. Method according to claim 2, by selectively applying the laser radiation to predetermined sections of the surface of the wire.

4. Device (600) for manufacturing of structured contact wires (360) for silprings (160), comprising
- at least one laser source (601) for generating at least one laser beam (602),
- at least one splitting means (610) for splitting the at least one laser beam (602) into at least two partial beams (611, 612),
- at least one deflecting and/or guiding and/or collimating means (615, 620, 621) for directing at least two of the partial beams (611, 612) to a focus spot (630),
- at least one transport means (650, 651) for transporting and/or guiding and/or holding a wire (200) at the focus spot (630).

5. Device according to claim 4,
**characterized in that**
a means for controlling the laser beam intensity and/or time is provided to selectively structure the wire surface.

6. Slipring contact wire (300, 360) comprising a metal body of the group of steel, brass,
and a combination thereof, which has been processed by a method of claim 1 or claim 2.

7. Slipring contact wire (360) comprising a metal body of the group of steel, brass,
and a combination thereof, which has been processed by a device (600) according to claim 4.

8. A slipring brushblock comprising at least one carrier holding at least one contact wire according to any one of the previous claims 6 or 7.

9. A slipring comprising at least one contact wire according to any one of claims 6 or 7.

## Patentansprüche

1. Verfahren zum Herstellen von Kontaktdrähten (300) für Schleifringe (160), umfassend die Schritte:
a. Ziehen eines Drahtes durch ein Zieheisen (800), wodurch eine Oberflächenstruktur (301, 302, 303) in den Draht gedrückt wird,
b. Beschichten und/oder Plattieren des Drahtes mit einem ersten Metall der Gruppe Nickel, Chrom oder einer Kombination davon,
c. Beschichten und/oder Plattieren des Drahtes mit einem zweiten Metall der Gruppe Gold, Silber oder einer Kombination davon.

2. Verfahren zum Herstellen von Kontaktdrähten (360) für Schleifringe (160), umfassend die Schritte:
a. Beschichten und/oder Plattieren eines Drahtes mit einem ersten Metall der Gruppe Nickel, Chrom oder einer Kombination davon,
b. Beschichten und/oder Plattieren des Drahtes mit einem zweiten Metall der Gruppe Gold, Silber oder einer Kombination davon,
c. Abgeben von Laserstrahlung und Erzeugen eines Interferenzmusters der Laserstrahlung an die Oberfläche des Drahts,
d. selektives Erwärmen der Oberfläche, wie durch das Interferenzmuster definiert,
e. Modifizieren der Kristallstruktur und/oder Vorsehen von Vorsprüngen und/oder Vertiefungen aufgrund von Schmelzen und/oder Verdampfen des Oberflächenmaterials, wobei die Schritte c. bis e. vor oder nach einem der Schritte a. und b. angewendet werden.

3. Verfahren nach Anspruch 2, durch selektives Anwenden der Laserstrahlung auf vorbestimmte Abschnitte der Oberfläche des Drahts.

4. Vorrichtung (600) zum Herstellen von strukturierten Kontaktdrähten (360) für Schleifringe (160), umfassend
- mindestens eine Laserquelle (601) zum Erzeugen mindestens eines Laserstrahls (602),
- mindestens eine Aufteileinrichtung (610) zum Aufteilen des mindestens einen Laserstrahls (602) in mindestens zwei Teilstrahlen (611, 612),
- mindestens ein Umlenkungs- und/oder Führungs- und/oder Kollimationseinrichtung (615, 620, 621) zum Richten von mindestens zwei der Teilstrahlen (611, 612) auf einen Fokuspunkt (630),
- mindestens eine Transporteinrichtung (650, 651) zum Transportieren und/oder Führen und/oder Halten eines Drahtes (200) am Fokuspunkt (630).

5. Vorrichtung nach Anspruch 4,
**dadurch gekennzeichnet, dass**
ein Mittel zum Steuern der Laserstrahlintensität und/oder -zeit vorgesehen ist, um die Drahtoberfläche selektiv zu strukturieren.

6. Schleifringkontaktdraht (300, 360), umfassend einen Metallkörper aus der Gruppe Stahl, Messing und einer Kombination davon, der durch ein Verfahren nach Anspruch 1 oder Anspruch 2 verarbeitet wurde.

7. Schleifringkontaktdraht (360), umfassend einen Metallkörper aus der Gruppe Stahl, Messing und einer Kombination davon, der von einer Vorrichtung (600) nach Anspruch 4 verarbeitet wurde.

8. Schleifringbürstenblock, umfassend mindestens einen Träger, der mindestens einen Kontaktdraht nach einem der vorhergehenden Ansprüche 6 oder 7 hält.

9. Schleifring, umfassend mindestens einen Kontaktdraht nach einem der Ansprüche 6 oder 7.

## Revendications

1. Procédé de réalisation de fils de contact (300) pour des bagues collectrices (160), comprenant les étapes de :
a. traction d'un fil à travers une filière d'étirage (800), pressant ainsi une structure de surface (301, 302, 303) dans le fil,
b. revêtement et/ou placage du fil avec un premier métal du groupe du nickel, du chrome, ou d'une combinaison de ceux-ci,
c. revêtement et/ou placage du fil avec un second métal du groupe de l'or, de l'argent, ou d'une combinaison de ceux-ci.

2. Procédé de réalisation de fils de contact (360) pour des bagues collectrices (160), comprenant les étapes de :
a. revêtement et/ou placage d'un fil avec un premier métal du groupe du nickel, du chrome, ou d'une combinaison de ceux-ci,
b. revêtement et/ou placage du fil avec un second métal du groupe de l'or, de l'argent, ou d'une combinaison de ceux-ci,
c. délivrance d'un rayonnement laser et génération d'une figure d'interférence du rayonnement laser à la surface du fil,
d. chauffage sélectif de la surface telle que définie par la figure d'interférence,
e. modification de la structure cristalline et/ou fourniture de protubérances et/ou d'évidements en raison d'une fusion et/ou d'une évaporation du matériau de surface,
dans lequel les étapes c. à e. peuvent être appliquées avant ou après l'une quelconque des étapes a. et b.

3. Procédé selon la revendication 2, par l'application sélective du rayonnement laser à des sections prédéterminées de la surface du fil.

4. Dispositif (600) de fabrication de fils de contact structurés (360) pour des bagues collectrices (160), comprenant
- au moins une source laser (601) pour générer au moins un faisceau laser (602),
- au moins un moyen de séparation (610) pour séparer l'au moins un faisceau laser (602) en au moins deux faisceaux partiels (611, 612),
- au moins un moyen de fléchissement et/ou de guidage et/ou de collimation (615, 620, 621) pour diriger au moins deux des faisceaux partiels (611, 612) vers un point de focalisation (630),
- au moins un moyen de transport (650, 651) pour transporter et/ou guider et/ou maintenir un fil (200) au niveau du point de focalisation (630).

5. Dispositif selon la revendication 4,
**caractérisé en ce que**
un moyen pour réguler l'intensité et/ou la durée du faisceau laser est fourni pour structurer sélectivement la surface de fil.

6. Fil de contact de bague collectrice (300, 360) comprenant un corps en métal du groupe de l'acier, du laiton, et d'une combinaison de ceux-ci, qui a été traité par un procédé selon la revendication 1 ou la revendication 2.

7. Fil de contact de bague collectrice (360) comprenant un corps en métal du groupe de l'acier, du laiton, et une combinaison de ceux-ci, qui a été traité par un dispositif (600) selon la revendication 4.

8. Bloc balai de bague collectrice comprenant au moins un support maintenant au moins un fil de contact selon l'une quelconque des revendications 6 ou 7.

9. Bague collectrice comprenant au moins un fil de contact selon l'une quelconque des revendications 6 ou 7.
